# EUROPÄISCHE PATENTANMELDUNG

(11) **EP 3 015 824 A1**
(43) Veröffentlichungstag der Anmeldung: **04.05.2016**
(21) Anmeldenummer: 15185574.9
(22) Anmeldetag: 17.09.2015
(51) Int. Cl.: G01D 4/00

(54) **BEFESTIGUNGSRAHMEN FÜR OPTISCHE SENSOREN**

(30) Priorität: 30.10.2014 DE 102014015930
(71) Anmelder: RWE Effizienz GmbH, 44139 Dortmund (DE)
(72) Erfinder: KEMMANN, Harald, 42555 Velbert (DE); BECKER, Marc Oliver, 42853 Remscheid (DE)
(74) Vertreter: Cohausz & Florack

(57) **Zusammenfassung**

Befestigungsrahmen 14, insbesondere zur Befestigung eines optischen Sensors an einem mechanischen Zähler 4, mit einer Basisplatte 16 mit einer Vorderseite und einer Rückseite, Befestigungsmitteln 24 eingerichtet zum zumindest kraftschlüssigen Aufnehmen eines digitalen Zählwerks, wobei die Basisplatte 16 zwei durch eine Öffnung der Basisplatte 16 voneinander beabstandete Schenkel 16a, 16b aufweist. Auf den Schenkeln 16a, 16b ist auf der Vorderseite jeweils zumindest eine Kalibriermarkierung 20a, 20b angeordnet.

## Beschreibung

Der Gegenstand betrifft einen Befestigungsrahmen, insbesondere zur Befestigung eines optischen Sensors an einem mechanischen Zähler. Darüber hinaus betrifft der Gegenstand ein System mit einem solchen Befestigungsrahmen als auch ein Verfahren zum Befestigen eines Befestigungsrahmens an einem Zähler.

Mechanische Zähler, insbesondere Energieverbrauchszähler sind hinlänglich bekannt. Im Stand der Technik sind solche Zähler für beispielsweise Strom, Gas und Wasser seit langem bekannt. Allen Zählern gemeinsam ist ein mechanisches Zählwerk. In diesem mechanischen Zählwerk werden Nummernscheiben (auch Zählscheiben, Zählräder, Nummernräder oder dergleichen genannt) über mechanische Zählimpulse angetrieben. Die Nummernscheiben sind entlang einer gemeinsamen Achse nebeneinander angeordnet. Ein Sichtfenster zeigt den aktuellen Zählstand (auch Zählwert genannt) derart an, dass die entlang des Sichtfensters horizontal entlang in etwa einer Gerade angeordneten, auf den Nummernscheiben angeordneten Ziffern einen aktuellen Zählwert repräsentieren.

Solche mechanischen Zähler müssen manuell ausgelesen werden. Das heißt, dass ein Mitarbeiter des Messstellenbetreibers oder des Energieversorgers regelmäßig, üblicherweise jährlich, den Zählstand ablesen muss. Dies kann auch nur stichprobenartig erfolgen. Zählstände können auch von Kunden selbst ausgelesen und mitgeteilt werden, doch ist eine Kontrolle stets notwendig. Dies führt zu erheblichen Verwaltungsaufwand.

Außerdem wird beispielsweise im Gas und/oder Strommarkt die Möglichkeit gefordert, laufend den Energieverbrauch erfassen zu können. Zum Einen soll dies dem Verbraucher Transparenz über seinen eigenen Energieverbrauch geben. Der Verbraucher soll stets den aktuellen Zählstand auslesen können. Außerdem sollen beispielsweise zeitabhängige Tarife eingeführt werden, die ein zeitabhängiges Ablesen/Erfassen eines Zählerstands notwendig machen.

Neben den genannten bestehen eine Vielzahl anderer Bedürfnisse, bestehende mechanische Zähler durch elektronische, intelligente Zähler auszutauschen. Bei mehr als 45 Millionen installierten mechanischen Elektrizitätszählern in der Bundesrepublik Deutschland ist ein solcher Austausch jedoch finanziell als auch von der notwendigen Installationszeit kaum darstellbar. Es müssen andere Möglichkeiten geschaffen werden, Energiemengenzähler elektronisch auslesen zu können.

Aus der deutschen Offenlegungsschrift DE 10 2010 053 019 A1 ist die Möglichkeit beschrieben, einen optischen Sensor an einem mechanischen Zähler anzuordnen. Hierzu wird der optische Sensor mittels einer Justiereinrichtung elektronisch an dem Zählwerk, insbesondere den Zählscheiben, ausgerichtet und anschließend auf der Scheibe des mechanischen Zählers verklebt. Nachteilig bei diesem Verfahren ist die aufwendige Elektronik, die zur Justierung des optischen Sensors an dem Zähler notwendig ist. Außerdem ist es nachteilig, dass der optische Sensor, nachdem er an dem Zähler festgeklebt wurde, von diesem nicht mehr zerstörungsfrei entfernt werden kann. Ein Defekt des optischen Sensors erfordert darüber hinaus den Austausch der gesamten Vorrichtung.

Aus der GB 2 460 517 A ist eine Befestigungsvorrichtung bekannt, mit deren Hilfe ein optischer Sensor an einem elektro-mechanischen Zähler befestigt werden kann. Der mechanische Zähler weist im Gegensatz zu mechanischen Zählern eine optische Schnittstelle auf, über die Zählerinformationen optisch ausgegeben werden können. Insofern ist der hierzu notwendige elektro-mechanische Zähler bereits mit Funktionen ausgestattet, die herkömmliche mechanische Zähler nicht aufweisen. Aus diesem Grunde ist eine Ausrichtung des optischen Sensors an den Zählscheiben des elektro-mechanischen Zählers nicht notwendig. Vielmehr wird der optische Sensor unmittelbar an den optischen Ausgang des elektro-mechanischen Zählers angeschlossen.

Ein entsprechender optischer Sensor ist auch in der GB 2 462 006 beschrieben. Auch hier wird ein optischer Sensor an dem optischen Ausgang eines elektro-mechanischen Zählers angeordnet. Zur Fixierung des optischen Sensors wird ein Magnet verwendet. Durch die Verwendung des optischen Ausgangs des elektro-mechanischen Zählers ist das Anordnen des optischen Sensors unproblematisch, da dieser nur unmittelbar über den optischen Ausgang angeordnet werden muss.

Dem Gegenstand lag die Aufgabe zugrunde, die Möglichkeit zu schaffen, einen optischen Sensor derart an einen Zähler mit rein mechanischem Zählwerk anbringen zu können, dass die Anbringung zum Einen zerstörungsfrei möglich ist und zum Anderen das optische Auslesen des mechanischen Zählwerks, insbesondere der Zählscheiben, mit einer verlässlichen Genauigkeit sichergestellt werden kann.

Diese Aufgabe wird gegenständlich durch einen Befestigungsrahmen nach Anspruch 1, ein System nach Anspruch 10 sowie ein Verfahren nach Anspruch 13 gelöst.

Zunächst ist erkannt worden, dass selbst der Austausch bestehender Zähler durch Zähler mit optischem Ausgang in einem realistischen Zeitrahmen nicht möglich ist. Darüber hinaus sind die Kosten für mechanische Zähler mit optischem Ausgang erheblich, sodass nicht davon ausgegangen werden kann, dass in naher Zukunft große Teile der installierten Zähler über optische Ausgänge verfügen. Zum Anderen wäre es bei einem ohnehin durchzuführenden Ausbau bestehender mechanischer Zähler durch solche mit optischem Ausgang durchaus möglich, diese Zähler direkt mit Kommunikationsschnittstellen zu versehen, um diese über Weitverkehrsnetze fernauslesbar zu machen.

Auf der anderen Seite ist erkannt worden, dass der Einbau als auch der Austausch eines optischen Sensors für einen mechanischen Zähler bedienerfreundlich sein muss, insbesondere durch jeden, auch handwerklich unbegabten Laien ausführbar sein muss. Darüber hinaus muss sichergestellt sein, dass die mechanische Fixierung den mechanischen Zähler nicht beschädigt, da das Eigentum an dem Zähler nicht immer beim Betreiber der Verbrauchsstelle liegt. Vielmehr kann auch der Messstellenbetreiber der Eigentümer sein. Dieser ist aber nicht zwingend der Dienstleister, der den Zähler ausliest. Insofern sind jegliche mechanische Veränderungen an dem Zähler zu vermeiden.

Schließlich muss die Lösung mechanisch als auch elektrisch einfach sein, um die Kosten einer Auslesbarkeit des mechanischen Zählers so gering wie möglich, insbesondere unterhalb derer zu halten, die durch den Austausch eines mechanischen Zählers durch einen elektronischen verursacht würden.

Diese Erkenntnisse haben zur gegenständlichen Lösung geführt, dass zunächst ein Befestigungsrahmen mit einer Basisplatte zur Verfügung gestellt wird. Die Basisplatte ist vorzugsweise eben und verfügt über eine Vorder- und eine Rückseite.

Auf der Vorderseite der Basisplatte sind Befestigungsmittel vorgesehen. Mittels dieser Befestigungsmittel ist es möglich, einen optischen Sensor an der Basisplatte zumindest kraftschlüssig zu befestigen. Vorzugsweise kann auch eine formschlüssige Verbindung zwischen dem Befestigungsmitteln und dem optischen Sensor ermöglicht werden. Mittels der Befestigungsmittel ist es möglich, den optischen Sensor an einer definierten Position im Verhältnis zur Basisplatte an dieser anzuordnen. Um dem optischen Sensor einen optisch ungehinderten Zugang zu dem Zählwerk, insbesondere zu den Zählscheiben, insbesondere zu dem Sichtfenster der Zählscheiben zu ermöglichen, ist in der Basisplatte eine Öffnung vorgesehen. Diese Öffnung ist durch zwei voneinander beabstandete Schenkel der Basisplatte definiert.

Die Befestigungsmittel stellen einen Fixpunkt auf der Basisplatte dar. Relativ zu diesem Fixpunkt wird der optische Sensor ortsfest angeordnet. Mit Hilfe einer Kalibriermarkierung an den Schenkeln ist es möglich, die relative Position der Befestigungsmittel zu der Öffnung und insbesondere zu den Zählscheiben des mechanischen Zählwerks zu definieren. Hierzu ist eine Kalibriermarkierung auf der Vorderseite der Schenkel angeordnet. Mittels der Kalibriermarkierung ist es möglich, die Öffnung der Basisplatte relativ zum mechanischen Zähler und/oder dem mechanischen Zählwerk und dessen Zählscheiben derart anzuordnen, dass vorzugsweise eine gedachte Gerade zwischen den Kalibriermarkierungen und dem Sichtfenster der Zählscheiben liegt.

Der mechanisch nicht gebildete Laie ist in der Lage, mittels der Kalibriermarkierungen die Basisplatte auf dem Zähler so anzuordnen, dass eine gedachte Gerade zwischen den Kalibriermarkierungen auf dem Sichtfenster der Zählscheiben liegt. Insbesondere kann dem Laien mitgeteilt werden, dass er die Kalibriermarkierungen so zum Sichtfenster ausrichten soll, dass diese ungefähr in der Mittelachse des Sichtfensters liegen.

Die Zählscheiben sind entlang einer gemeinsamen Achse angeordnet. Parallel zu dieser Achse liegt eine gedachte Nulllinie. Eine Rotation der Zählscheiben um diese Nulllinie repräsentiert einen Energieverbrauch. Um diese Nulllinie herum liegt parallel zu der Drehachse der Zählscheiben ein Sichtfenster des mechanischen Zählwerks. Die Mittelachse des Sichtfensters verläuft parallel zu der Achse der Zählscheiben. Die in dem Sichtfenster sichtbare Kombination der Ziffern der Zählscheiben ist repräsentativ für den Energieverbrauch. Durch das Anordnen der Basisplatte, insbesondere der Kalibriermarkierung im Wesentlichen parallel zu dem Sichtfenster bzw. dessen Mittelachse und somit auch der Nulllinie ist es möglich, den optischen Sensor in einer fest definierten Lage zu den Zählscheiben des mechanischen Zählers über den Befestigungsmitteln anzuordnen, da der Abstand zwischen Befestigungsmitteln und Kalibriermarkierung durch die Basisplatte fest definiert ist.

Um ein Verwinden der Basisplatte bei der Montage auf dem mechanischen Zähler zu vermeiden, ist die Basisplatte vorzugsweise biegesteif gebildet. Dabei ist die Basisplatte vorzugsweise aus einem thermoplastischen Kunststoff gebildet. Insbesondere kann die Basisplatte ein Spritzgussteil sein. Auch ist die Basisplatte vorzugsweise einstückig. Sie kann aber auch aus zwei separaten Schenkeln gebildet sein, die jeweils für sich an dem Zähler montiert sind. Im montierten Zustand sind die Schenkel über die Sichtscheibe des Zählers miteinander verbunden.

Beim Aufschieben des Sensors auf die Befestigungsmittel ist damit zu rechnen, dass erhöhte Kräfte und Drehmomente auf die Befestigungsmittel wirken. Um zu verhindern, dass beim Anbringen und/oder Entfernen des optischen Sensors an dem Befestigungsrahmen Beschädigungen an dem Befestigungsmitteln entstehen, wird vorgeschlagen, dass die Befestigungsmittel aus einem Material gebildet sind, welches eine höhere Biegefestigkeit aufweist als das Material der Basisplatte.

Vorzugsweise sind die Befestigungsmittel und die Basisplatte stoffschlüssig miteinander verbunden. Es ist jedoch auch möglich, dass die Befestigungsmittel und die Basisplatte monolithisch gebildet sind. Beides führt zu einer mechanisch belastbaren Verbindung zwischen den Befestigungsmitteln und der Basisplatte. Insbesondere ist sicherzustellen, dass keine Relativbewegung zwischen den Befestigungsmitteln und der Basisplatte stattfindet. Da auf der Basisplatte die Kalibriermarkierungen angeordnet sind und der optische Sensor an den Befestigungsmitteln befestigt wird, wird durch die Basisplatte in Verbindung mit den Befestigungsmitteln die relative Lage des optischen Sensors zu den Kalibriermarkierungen und mithin zu dem Sichtfenster des mechanischen Zählers definiert. Da diese Lage wesentlich für die Erkennbarkeit und Auswertbarkeit der Ziffern auf den Zählscheiben des mechanischen Zählwerks ist, ist die Lage des optischen Sensors maßgeblich für die Qualität des Auslesens des Zählers.

Auch wird vorgeschlagen, dass die Befestigungsmittel aus zumindest zwei Vorsprüngen gebildet sind. In diesem Fall ist der Sensor gegenüber einer Rotation um die Achse der Vorsprünge gesichert und die Lage des Sensors zur Kalibriermarkierung auf der Basisplatte ist definiert.

Auch wird vorgeschlagen, dass die Vorsprünge sich von der Vorderseite weg erstrecken. Solche dornförmigen Vorsprünge eignen sich insbesondere, da der Sensor auf diese aufgeschoben werden kann. Durch eine geeignete Wahl der Eindringtiefe bzw. der Länge der Vorsprünge kann eine Rotation des Sensors um die Basisplatte bis zu einem bestimmten Drehmoment verhindert werden.

Auch wird vorgeschlagen, dass die Befestigungsmittel aus zumindest zwei Rücksprüngen gebildet sind. Auch in diesem Fall ist der Sensor gegenüber einer Rotation um die Achse der Rücksprünge gesichert und die Lage des Sensors zur Kalibriermarkierung auf der Basisplatte ist definiert.

Auch wird vorgeschlagen, dass die Rücksprünge sich in die Basisplatte hinein erstrecken. Solche Rücksprünge eignen sich insbesondere um den optischen Sensor mittels z.B. hinterschnittener Rastnasen zu verrasten oder in der Art eines Druckknopfes an der Basisplatte zu befestigen. Durch eine geeignete Wahl der Eindringtiefe bzw. der Tiefe der Rücksprünge kann eine Rotation des Sensors um die Basisplatte bis zu einem bestimmten Drehmoment verhindert werden.

Eine besonders sichere Fixierung des Sensors an der Basisplatte wird dadurch erreicht, dass die Befestigungsmittel an zumindest vier Eckebereichen der Basisplatte angeordnet sind. Dadurch, dass die Befestigungsmittel in diesem Fall voneinander einen großen räumlichen Abstand haben, wird ein Verdrehen des Sensors um die Befestigungsmittel herum verhindert.

Um beim Aufschieben des optischen Sensors auf die Vorsprünge mit zunehmender Eindringtiefe eine zunehmende räumliche Fixierung der Position des optischen Sensors zu erreichen wird vorgeschlagen, dass die Vorsprünge ausgehend von der Basisplatte sich verjüngend gebildet sind. Insbesondere sind die Vorsprünge konisch verjüngend gebildet. Dies ermöglicht es, zunächst, mechanisch geführt durch die Vorsprünge, den Sensor auch mit geringer Kraft auf diese aufzuschieben. Bei einer bestimmten Eindringtiefe werden die Vorsprünge in Aufnahmen des Sensors dadurch fixiert, dass die Außenwand der Vorsprünge an Innenwände von Aufnahmen in dem Sensor gedrückt wird. Hierdurch wird ein Abziehen des Sensors von den Vorsprüngen erschwert und andererseits wird der Sensor in einer definierten Position relativ zu den Vorsprüngen an diesen gehalten.

Die Biegesteifigkeit der Vorsprünge kann dadurch erhöht werden, dass diese einen gewinkelten Querschnitt, insbesondere in L-, V- oder U-Form haben. Hierdurch wird ein Abbrechen der Vorsprünge weniger wahrscheinlich und die Haltbarkeit des Befestigungsrahmens erhöht.

Um den Sensor nicht nur Kraft sondern auch formschlüssig an den Vorsprüngen zu fixieren, wird vorgeschlagen, dass die Vorsprünge an ihren Enden Rastnasen aufweisen. In dem Sensor können entsprechende Hinterschnitte vorgesehen sein, in welchen die Rastnasen verrasten können und so einen Formschluss zwischen den Vorsprüngen und den Aufnahmen des Sensors bilden.

Um die Öffnung in der Basisplatte zu bilden, wird vorgeschlagen, dass diese eine U-oder O-förmige Grundform aufweist. Dadurch, dass entweder ein oder zwei Stege die Schenkel miteinander verbinden, wird deren relative Lage zueinander durch die Basisplatte definiert. Außerdem wird vorgeschlagen, dass zwischen den Schenkeln eine Sichtöffnung in der Basisplatte gebildet ist. Durch diese Sichtöffnung ist der optische Weg zwischen einem auf dem Befestigungsmitteln befestigten optischen Sensor und dem Zählwerk des mechanischen Zählers frei von Beeinträchtigungen.

Gemäß einem Ausführungsbeispiel wird vorgeschlagen, dass die Kalibriermarkierung an zwei gegenüberliegenden Kanten der Schenkel angebracht ist. An zwei gegenüberliegenden, einander zugewandten Kanten der Schenkel, die vorzugsweise die Öffnung der Basisplatte definieren, können die Kalibriermarkierungen vorgesehen sein. Vorzugsweise sind die Kalibriermarkierungen aufeinander zu weisende Pfeile. Eine Linie durch diese Pfeile hindurch kann als Erfassungslinie des optischen Sensors betrachtet werden. Diese sollte bei der Montage des Befestigungsrahmens möglichst parallel zu der Rotationsachse des Zählwerks bzw. der Zählscheiben des Zählwerks und mithin der Nulllinie angeordnet werden. Außerdem sollte diese Linie möglichst zentral in dem Sichtfenster des Zählwerks angeordnet sein, insbesondere möglichst auf der Nulllinie.

Um die Kalibrierung weiter zu verbessern wird vorgeschlagen, dass neben der Kalibriermarkierung auch Bereichsmarkierungen vorgesehen sind. An jeder Kalibriermarkierung können äquidistant von der Kalibriermarkierung entfernt jeweils zwei Bereichsmarkierungen angeordnet sein. Diese können eine Ober- als auch eine Untergrenze darstellen. An beiden Kalibriermarkierungen sind somit jeweils in gleichen Abständen diese Ober- und Untergrenzen markiert, insbesondere durch Linien.

Vorzugsweise ist die Kalibriermarkierung als auch die Bereichsmarkierung auf dem Befestigungsrahmen aufgedruckt oder in diesen eingeprägt oder auf diesen aufgeprägt.

Die Breite eines Sichtfensters eines mechanischen Zählwerks ist zumindest durch die Anzahl der Zählscheiben definiert. Zumindest diese Breite muss die Öffnung in dem Befestigungsrahmen haben, vorzugsweise ist der Abstand zwischen den Schenkeln in etwa gleich der Breite des Sichtfensters, zumindest der Breite des Zählwerks. Die Höhe des Sichtfensters ist definiert durch den Radius der Zählscheiben und insbesondere die Größe der Ziffern auf den Zählscheiben. Vorzugsweise entspricht die Höhe eines Sichtfensters in etwa der Länge einer Sekante durch einen Winkelabschnitt zwischen 30° und 40°, vorzugsweise in etwa 36 ° einer Zählscheibe. Vorzugsweise haben die Zählscheiben gleiche Radien. Um sicherzustellen, dass der optische Sensor den gesamten Bereich des Sichtfensters erfassen kann, ist dieser möglichst mittig an dem Sichtfenster anzuordnen. Um dies sicherzustellen sind Bereichsmarkierungen vorgesehen, deren Abstand zueinander vorzugsweise der Höhe eines Sichtfensters eines mechanischen Zählwerks nachgebildet ist.

Ein weiterer Aspekt ist ein System mit einem soeben beschriebenen Befestigungsrahmen als auch mit Fixiermitteln. Die Fixiermittel sind dazu eingerichtet, eine haftende Verbindung zwischen dem Befestigungsrahmen und dem mechanischen Zähler herzustellen. Durch die haftende Verbindung wird sichergestellt, dass der Befestigungsrahmen zerstörungsfrei und rückstandsfrei von dem mechanischen Zähler entfernt werden kann. Dies ist insofern relevant, als dass der Eigentümer des Zählers häufig weder der Betreiber der Verbrauchsstelle noch der Ablesedienstleister ist.

Gemäß einem Ausführungsbeispiel wird vorgeschlagen, dass die Fixiermittel eine zumindest einseitig haftende Oberfläche aufweisen. Dadurch ist es möglich, die Fixiermittel an dem Zähler haftend zu fixieren. Auch ist es möglich, dass zumindest eine Oberfläche des Fixiermittels klebend und die andere haftend ist. Dann können die Fixiermittel an dem Befestigungsrahmen festgeklebt werden und haftend an den mechanischen Zähler befestigt werden. Durch das Verkleben der Fixiermittel an dem Befestigungsrahmen wird eine bessere Verbindung als beim Haften hergestellt.

Um ggf. Unebenheiten im Bereich der Oberfläche des Zählers auszugleichen, wird vorgeschlagen, dass die Fixiermittel aus einem Substrat aus einem elastischen Schaumstoff gebildet sind. Dieser passt sich eventuellen Unebenheiten auf der Oberfläche des Zählers an. Insbesondere ist die Sichtscheibe nicht immer groß genug, um den Befestigungsrahmen vollständig im Bereich der Sichtscheibe anzuordnen. Ist das Fixiermittel dann aus einem elastischen Schaumstoff gebildet, kann dieser auch an einem Übergang zwischen einem Gehäuse und einer Sichtscheibe des Zählers angeordnet werden, ohne dass die mechanische Fixierung derart verschlechtert wird, dass eine Befestigung nicht mehr möglich ist. Insbesondere eignet sich ein offenporiger Schaumstoff, der auch als Moosgummi bezeichnet wird, zur Bildung der Fixiermittel.

Gemäß einem Ausführungsbeispiel wird vorgeschlagen, dass in einem Gebinde jeweils ein Befestigungsrahmen und zumindest zwei Streifen Fixiermittel zusammengefasst sind. Es vereinfacht den Logistikprozess erheblich, da die Befestigungsrahmen mit den Fixiermitteln zusammen in einem Gebinde zur Verfügung gestellt werden können. Da die Schenkel in der Regel kleinere Breiten haben als die Gesamtbreite des Befestigungsrahmens, wird vorgeschlagen, dass zwei Streifen des Fixiermittels eine Länge aufweisen, die in etwa der Breite eines Schenkels entspricht und ein Streifen des Fixiermittels eine Länge aufweist, die in etwa der Breite des Befestigungsrahmens entspricht. Der mechanische Laie kann so ganz leicht die beiden ersten Fixiermittel an den Schenkeln anordnen und das zweite Fixiermittel an der längeren Unterkante des Befestigungsrahmens und so den Befestigungsrahmen für die Befestigung an dem Zähler vorbereiten.

Auch ist es möglich, dass jeweils mehrere Sätze von Fixierstreifen, ein Satz gebildet z.B. aus zumindest zwei Streifen mit einer Länge in etwa der Breite eines Schenkels und ein Streifen mit einer Länge von etwa der Breite des Befestigungsrahmens. Dabei können die Materialstärken des Substrats pro Satz unterschiedlich sein, beispielsweise Materialstärken von 1mm, 2mm und 3mm. Hierdurch ist es möglich, geeignete Kombinationen für Höhenunterschiede auf der Oberfläche des Zählers auszugleichen.

Das System ist ferner dadurch weitergebildet, dass ein optischer Sensor zum Anschluss an die Befestigungsmittel vorgesehen ist. Insbesondere weist der Sensor eine zu den Befestigungsmittel korrespondierende Stirnseite auf.

Ein weiterer Aspekt ist ein Verfahren zum Befestigen eines Befestigungsrahmens nach Anspruch 1 mit einem System nach Anspruch 10 an einem mechanischen Zähler. Hierbei wird zunächst auf der Rückseite des Befestigungsrahmens das Fixiermittel befestigt. Anschließend wird die Öffnung des Befestigungsrahmens mit Hilfe der Kalibrierungsmarkierung an einem mechanischen Zählwerk des Zählers ausgerichtet. Hierbei erfolgt die Ausrichtung vorzugsweise parallel zur Rotationsachse der Zählscheiben des Zählwerks. Anschließend wird der Befestigungsrahmen in der ausgerichteten Position haftend an der Oberfläche des Zählers befestigt.

Nachdem der Befestigungsrahmen an dem mechanischen Zähler haftend befestigt wurde, kann ein optischer Sensor an den Befestigungsmitteln des Befestigungsrahmens befestigt werden. Durch die Kalibrierungsmarkierung ist die relative Position der Befestigungsmittel zu dem Zählwerk des Zählers definiert. Dadurch wird auch die relative Position des an den Befestigungsmitteln befestigten Sensors zu dem Zählwerk des Zählers definiert. Hierdurch wird erreicht, dass der optische Sensor vorzugsweise den gesamten relevanten Bereich des Zählwerks optisch erfassen kann.

Der relevante Bereich des Zählwerks ist vorzugsweise durch ein Sichtfenster definiert. In dem Sichtfenster ist vorzugsweise pro Zählscheibe jeweils maximal eine Ziffer zu erkennen. Dazu ist die Höhe des Sichtfensters in etwa gleich groß wie die Länge der Sekante durch einen Winkelabschnitt über die Zählscheibe von in etwa 36 Grad. Die Zählscheibe ist in 10 gleich große Winkelabschnitte unterteilt. Jedem Winkelabschnitt ist eine Ziffer von 0 bis 9 zugeordnet.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Figur 1a: ein Zählwerk eines mechanischen Zählers;
- Fig. 1b: eine Zählscheibe;
- Fig. 2a: eine schematische Darstellung eines mechanischen Zählers;
- Fig. 2b: eine schematische Darstellung eines weiteren mechanischen Zählers;
- Fig. 3a: eine Ansicht eines ersten Befestigungsrahmens nach einem Ausführungsbeispiel;
- Fig. 3b: eine Ansicht eines zweiten Befestigungsrahmens gemäß einem Ausführungsbeispiel;
- Fig. 3c: eine Ansicht eines Befestigungsrahmens gemäß einem weiteren Ausführungsbeispiel;
- Fig. 4a: eine Seitenansicht eines Befestigungsrahmens nach Figur 3a;
- Fig. 4b: ein Detail eines Befestigungsrahmens nach Figur 4a;
- Fig. 5: eine Rückansicht eines Befestigungsrahmens nach Figur 3a;
- Fig. 6: eine Gebinde mit Befestigungsrahmen und Fixiermitteln;
- Fig. 7a: eine schematische Schnittansicht eines montierten Befestigungrahmens;
- Fig. 7b: eine schematische Schnittansicht des montierten Befestigungsrahmens nach Figur 7a mit einem montierten optischen Sensor.

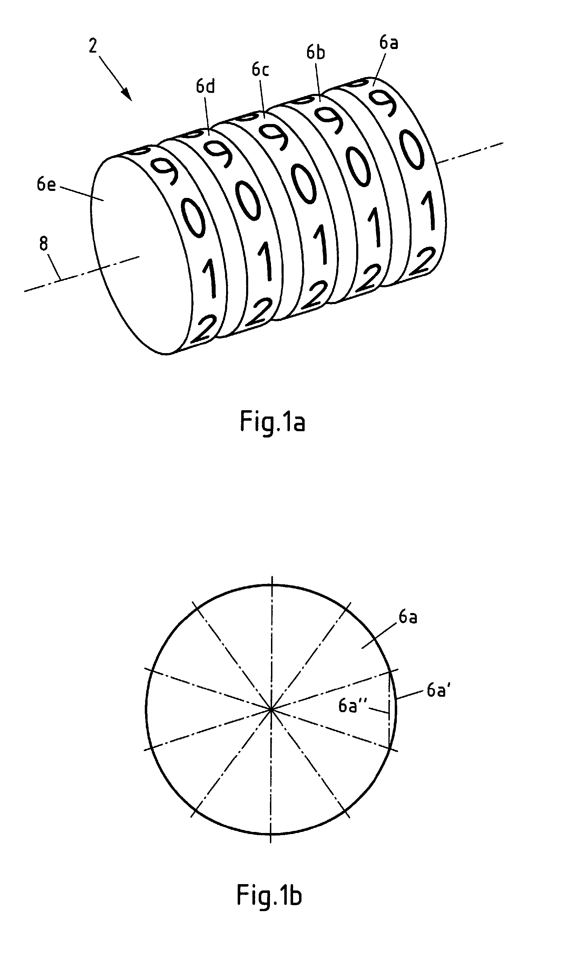

Energiemengenzähler, wie beispielsweise Stromzähler, Gaszähler, Wasserzähler oder dergleichen werden in herkömmlicher Weise mit einem mechanischen Zählwerk, wie es beispielhaft in Figur 1a dargestellt ist, betrieben. Das mechanische Zählwerk 2 wird über einen nicht dargestellten mechanischen Antrieb angetrieben. Der mechanische Antrieb übermittelt Zählimpulse von einem mechanischen oder elektromechanischen Sensor. Der Sensor erfasst beispielsweise eine Stromstärke, einen Volumenstrom oder dergleichen und gibt abhängig von den erfassten Werten mechanische Zählimpulse an das Zählwerk 2. Die Zählimpulse treiben die in dem Zählwerk 2 eingebauten Zählscheiben 6a-e mechanisch derart an, dass jede vollständige Umdrehung einer ersten Zählscheibe 6a zu einer 1/10 Drehung einer nachgelagerten Zählscheibe 6b führt. Hierdurch wird ein dezimales Zählsystem über die Zählscheiben 6a-e realisiert. Die Zählscheiben 6a-e rotieren um eine gemeinsame Drehachse 8.

Figur 1b zeigt eine Seitenansicht der Zählscheibe 6a. Die Zählscheibe 6a ist in zehn gleich große Winkelabschnitte 6a' unterteilt. In jedem der Winkelabschnitte 6a' ist eine Ziffer 0-9 aufgetragen. Der Bereich, in dem die Ziffer aufgetragen sein kann, ergibt sich aus der Länge der Sekante 6a" über den Kreisbogen 6a'. Bei einer vollständigen Umdrehung zeigt die Zählscheibe 6a jede Ziffer 0-9 genau einmal an.

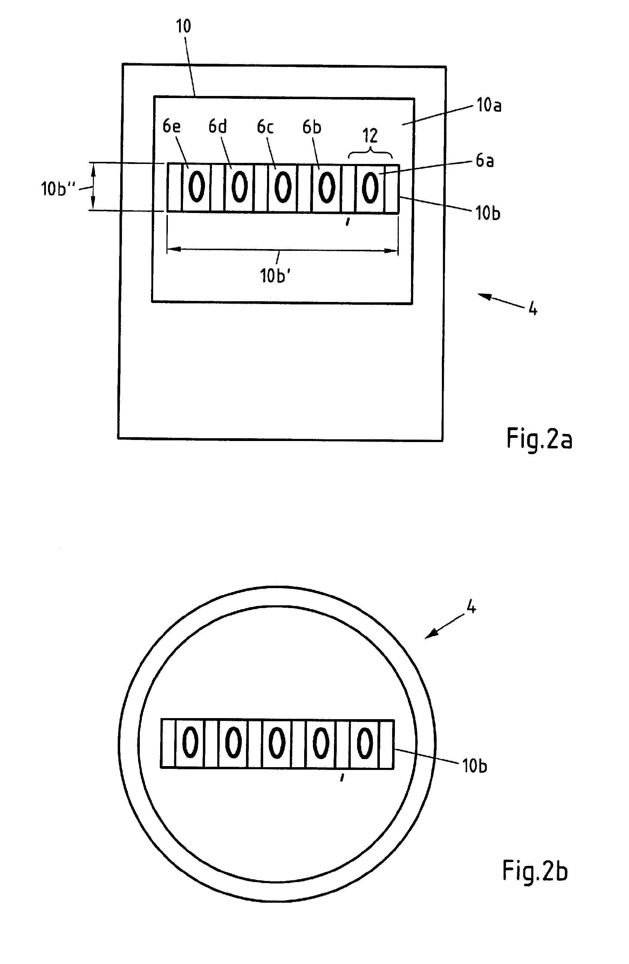

Das Zählwerk 2 wird in einem Zähler 4, wie in Figur 2a dargestellt ist, eingebaut. In dem Zähler 4 ist in der Regel eine Scheibe 10 aus einem bruchfesten Glas oder Plexiglas angeordnet. Durch die Scheibe 10 kann eine Blende 10a betrachtet werden. Die Blende 10a verdeckt das Zählwerk 2 bis auf ein Sichtfenster 10b. Das Sichtfenster 10b hat eine Breite 10b' in etwa entsprechend der Breite des Zählwerks 2. Die Höhe 10b" ist in der Regel in etwa entsprechend der Länge der Sekante 6a".Durch das Rotieren der Zählscheiben 6a-e werden bei einer vollständigen Umdrehung einer der Zählscheiben 6a-e in dem Sichtfenster 10b jeweils einmal die Ziffern 0-9 dieser Zählscheibe 6a-e dargestellt.

Zur Darstellung von Nachkommastellen des Zählwertes sind eine oder mehr Zählscheiben in einem insbesondere rot markierten Nachkommabereich 12 angeordnet. In der Figur 2a ist dies die Zählscheibe 6a, wohingegen die weiteren Zählscheiben 6b-e außerhalb des Nachkommabereichs 12 angeordnet sind. Bei einem Stromzähler wird in der Regel der Energieverbrauch in Kilowattstunden gemessen. Die erste Nachkommastelle löst den Verbrauch in Zehntel Kilowattstunden auf. Eine mögliche zweite oder dritte Nachkommastelle löst den Verbrauch entsprechend in 1/100 bzw. 1/1000 kWh auf. Bei einem Wasserzähler wird in der Regel die Durchflussmenge in Kubikmetern gemessen. Hierbei können ein, zwei oder drei Nachkommastellen den Verbrauch in Zehntel, Hundertstel oder Tausendstel Kubikmeter auflösen. Selbiges gilt natürlich auch für einen Gaszähler.

Zur besseren Markierung des Nachkommabereichs 12 ist es auch möglich, das die Ziffern auf der Zählscheibe 6a in einer anderen Farbe dargestellt sind als die Ziffern auf den anderen Zählscheiben, z.B. rot gegenüber weiß. Kann ein Bereich um die Ziffern der Nachkommastellen herum, im Bereich der Blende ebenfalls andersfarbig, insbesondere rot abgesetzt sein.

Figur 2b zeigt eine schematische Ansicht eines weiteren möglichen Energiemengenzählers 4. Die Darstellung zeigt einen häufig verwendeten Gas- oder Wasserzähler 4. Auch hier ist ein Sichtfenster 10b an einem Zählwerk 2 angeordnet.

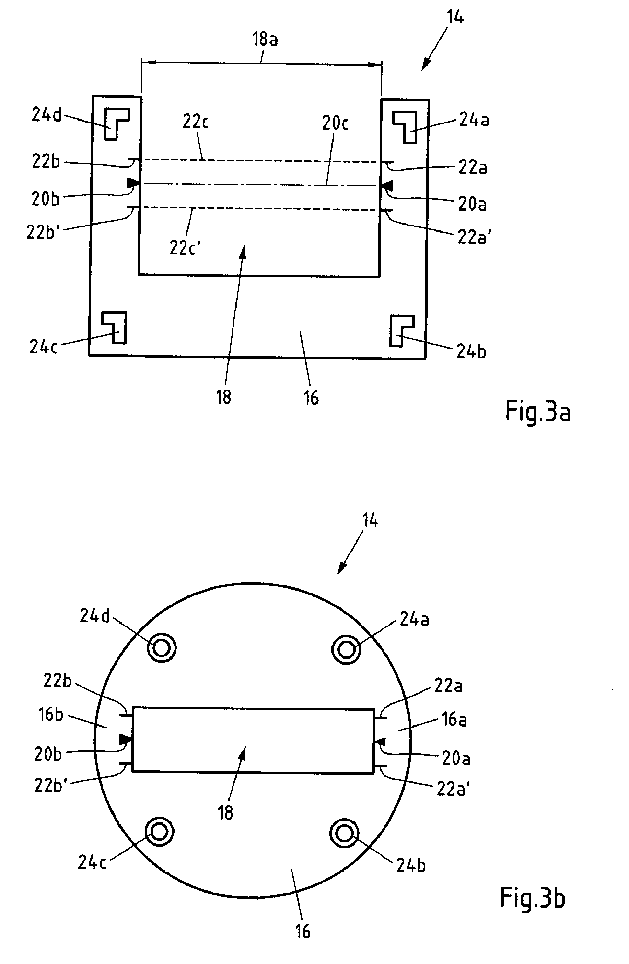

Figur 3a zeigt einen Befestigungsrahmen 14 gemäß einem Ausführungsbeispiel. Der Befestigungsrahmen 14 ist aus einer Basisplatte 16 gebildet. Die Basisplatte 16 hat eine Stärke zwischen 1 und 5 mm und ist vorzugsweise aus einem thermoplastischen Kunststoff, insbesondere im Spritzgussverfahren hergestellt worden. Die Basisplatte 16 weist zwei Schenkel 16a und 16b auf. Die Schenkel spannen eine Öffnung 18 auf. Die Breite 18a der Öffnung 18 entspricht in etwa der Breite 10b' des Sichtfensters 10b. Vorzugsweise ist die Breite 18a zwischen 1 und 5 mm breiter als die Breite 10b'.

An den aneinander zugewandten Kanten der Schenkel 16a, 16b ist jeweils eine Kalibriermarkierung 20a, 20b vorgesehen. Die Kalibriermarkierungen 20a, 20b können aufgedruckt, aufgeprägt oder eingeprägt sein. Die Kalibriermarkierungen 20a, 20b sind vorzugsweise in Pfeilform auf der Basisplatte 16 aufgebracht. Hierbei bieten sich insbesondere einander zugewandte Pfeile an.

Neben den Kalibriermarkierungen 20a, 20b sind jeweils oberhalb und unterhalb der Kalibriermarkierungen 20a, 20b auf jedem der Schenkel 16a, 16b Bereichsmarkierungen 22a, 22a' sowie 22b, 22b' aufgebracht. Auch die Bereichsmarkierungen 22a,a', b, b' können aufgedruckt, aufgeprägt oder eingeprägt sein.

Zur Justierung des Befestigungsrahmens an dem Zähler 4 können die Kalibriermarkierungen 20a, 20b und Bereichsmarkierungen 22a,a', b, b' verwendet. werden.

Zum Ausrichten des Basisrahmens 16 an dem Zähler 4 wird vorgeschlagen, dass der Basisrahmen 16 mit seiner Öffnung 18 über das Sichtfenster 10b gehalten wird. Mittels der Kalibriermarkierungen 20a, 20b, durch die eine virtuelle Grade 20c verläuft, wird der Befestigungsrahmen 14 an dem Sichtfenster 10b ausgerichtet. Insbesondere erfolgt die Ausrichtung derart, dass die virtuelle Gerade 20c in etwa parallel zu der Drehachse 8 und somit parallel zur Längsachse des Sichtfensters 10b ausgerichtet wird. Hierzu werden die Kalibriermarkierungen 20a, 20b vorzugsweise an dem jeweiligen Seitenrändern des Sichtfensters 10b angelegt, sodass die Kalibriermarkierung 20a, 20b in etwa in mittlerer Höhe entlang der Höhe 10b" des Sichtfensters 10b angeordnet sind.

Für eine genaue Justierung können die Bereichsmarkierungen 20a', 22a' sowie 20b', 22b', durch die auch jeweils virtuellen Geraden 22c, 22c' verlaufen, verwendet werden. Die Bereichsmarkierungen 20a, 22a' sowie 20b, 22b' dienen der Ausrichtung des Befestigungsrahmens 14 an dem Sichtfenster 10b, da deren Abstand zueinander, das heißt der Abstand zwischen den Bereichsmarkierungen 22a und 22a' als auch der Abstand zwischen den Bereichsmarkierungen 22b, 22b' in etwa der Höhe 10b" des Sichtfensters 10b entspricht. Die Bereichsmarkierungen 22a, 22a' sowie 22b, 22b' können ungefähr an den oberen und unteren Begrenzungen des Sichtfensters 10b angelegt werden.

Durch die beschriebene Justierung des Befestigungsrahmens 14 an dem Zähler 4 wird erreicht, dass die Lage des Befestigungsrahmens 14 relativ zu dem Sichtfenster 10b und somit auch zu der Drehachse 8 definiert ist. Nachdem die Justierung erfolgte, wird der Befestigungsrahmen 14 an dem Zähler 4, vorzugsweise der Scheibe 10 befestigt, insbesondere haftend befestigt.

Zur anschließenden Montage eines optischen Sensors dienen die Befestigungsmittel 24a-d. Diese Befestigungsmittel 24a-d sind, wie in der Figur 3a gezeigt, an den Eckbereichen des Befestigungsrahmens 14 angeordnet. Der Querschnitt der Befestigungsmittel 24a-d ist winklig, vorwiegend L-förmig, kann jedoch auch U- oder V-förmig sein. Das Material der Befestigungsmittel ist vorzugsweise ein biegesteiferes als das Material des Befestigungsrahmens 14, insbesondere der Basisplatte 16. Die Befestigungsmittel 24a -d sind in der Figur 3a als Vorsprünge gebildet, welche sich konisch von der Vorderseite der Basisplatte 16 aus der Zeichenebene heraus erstrecken. Vorzugsweise verlaufen die Befestigungsmittel 24a-d konisch verjüngend aus der Zeichenebene heraus.

Die Figur 3b zeigt ein weiteres Beispiel eines Befestigungsrahmens 14, bei dem die Basisplatte 16 kreisrund ist. In der Basisplatte 16 sind Schenkel 16a und 16b gebildet, welche eine Öffnung 18 seitlich abgrenzen. Wie auch bei der Figur 3a hat die Basisplatte Kalibriermarkierungen 20a, 20b sowie Bereichsmarkierungen 22a, 22a', 22b, 22b'.

Die Justierung des Befestigungsrahmens 16 an einem Sichtfenster 10b eines Zählers 4 erfolgt entsprechend der Beschreibung zu der Figur 3a. Die Befestigungsmittel 24a-d sind gemäß der Figur 3b als Rücksprünge in der Basisplatte 16 vorgesehen. Die Rücksprünge können beispielsweise in der Form von Aufnahmen für Druckknöpfe gebildet sein, sodass mittels einer Schnappverbindung ein optischer Sensor, der entsprechend geformte, zu den Aufnahmen 24a-d gebildete Vorsprünge aufweist, in die Rücksprünge der Befestigungsmittel 24a-d eingesetzt werden kann.

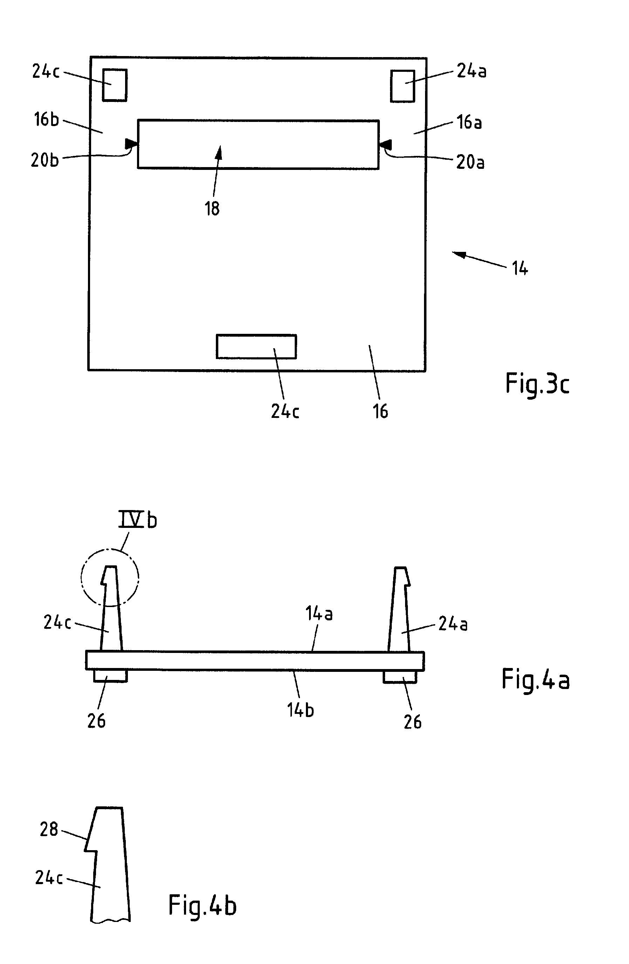

In der Figur 3c ist ein weiteres Ausführungsbeispiel eines Befestigungsrahmens 14 mit einer Basisplatte 16 dargestellt. Hier ist die Basisplatte 16 rechteckig und die Schenkel 16a, 16b umgrenzen die Öffnung 18 an den jeweiligen seitlichen Enden.

Auch bei der Basisplatte 16 sind Kalibriermarkierungen 20a, 20b aufgebracht. Die Kalibrierung erfolgt entsprechend der Beschreibung gemäß der Figur 3a. Die Basisplatte 16 gemäß der Figur 3c ist ohne die Bereichsmarkierungen 22a, 22a', 22b, 22b' gebildet. Eine Ausrichtung erfolgt dadurch, dass die Kalibriermarkierung 20a, 20b im Wesentlichen mittig in dem Sichtfenster 10b angeordnet werden, das heißt, dass die Höhe 10b" des Sichtfensters 10b durch die Kalibriermarkierung 20a, 20b in etwa zwei gleich lange Teilabschnitte unterteilt wird.

Ferner sind Befestigungsmittel 24a, 24b und 24c auf der Basisplatte 16 gemäß der Figur 3c angeordnet. Die Befestigungsmittel 24a, 24c sind an den oberen beiden Eckbereichen der Basisplatte 16 angeordnet und das Befestigungsmittel 24b ist an einer Unterkante der Basisplatte 16 angeordnet. Die Befestigungsmittel 24a-c sind vorliegend mit einem quadratischen oder rechteckigen Querschnitt gebildet und erstrecken sich aus der Zeichenebene heraus verjüngend.

Zum Befestigen eines optischen Sensors können die Befestigungsmittel 24 mit Rastnasen versehen sein, wie dies in den Figuren 4a und 4b dargestellt ist.

In der Figur 4a, welche eine Seitenansicht eines Befestigungsrahmens gemäß der Figur 3a darstellt, ist der Befestigungsrahmen 14 auf seiner Oberseite 14a mit den Befestigungsmitteln 24a, 24b gebildet. Die Oberseite 24a bzw. Vorderseite liegt gegenüber der Unterseite 14b bzw. Rückseite. Auf der Unterseite 14b sind die Haftstreifen 26 gezeigt. Die Haftstreifen 26 dienen als Fixiermittel und sind beispielsweise mit der Basisplatte 16 verklebt und haben eine haftende Oberfläche auf der der Basisplatte 16 abgewandten Seite.

Wie in der Figur 4a zu erkennen ist, erstrecken sich die Vorsprünge der Befestigungsmittel 24a, b ausgehend von der Vorderseite 14a konisch verjüngend. An ihren Enden haben die Befestigungsmittel 24a, 24b Rastnasen zum formschlüssigen Verbinden mit einem optischen Sensor. Ein Detail einer solchen Rastnase ist in der Figur 4b zu erkennen. Die Figur 4b zeigt die Spitze eines Befestigungsmittels 24b, welches als Vorsprung gebildet ist. An der Spitze ist eine Rastnase 28 vorgesehen, die durch einen Vorsprung gebildet ist. Die Rastnase 28 kann in einem nicht dargestellten Hinterschnitt einer Aufnahme eines optischen Sensors verrasten und so einen Formschluss zwischen den Befestigungsmitteln 24b und dem optischen Sensor gewährleisten.

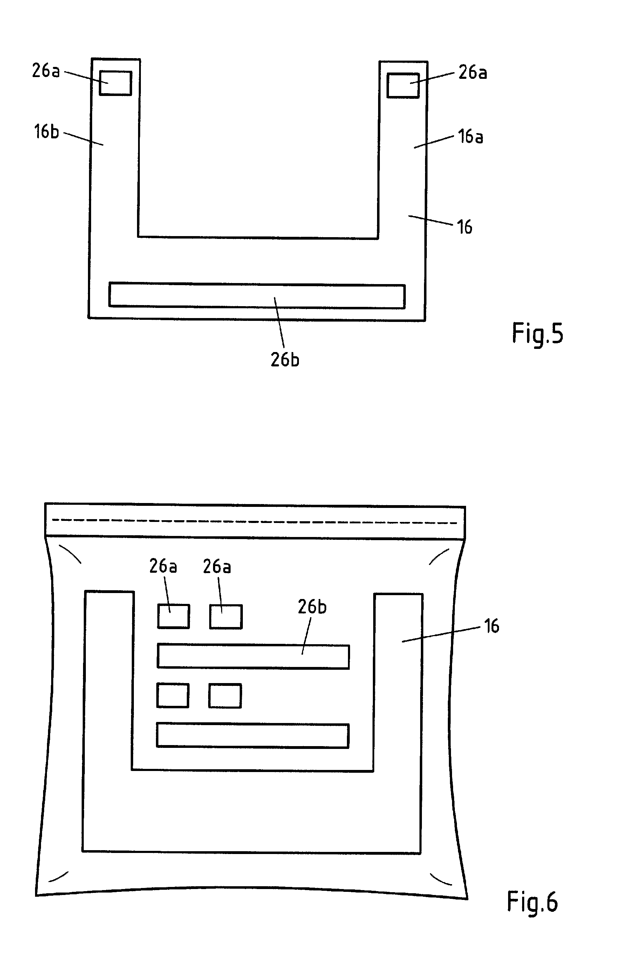

Figur 5 zeigt die Rückseite einer Basisplatte 16 mit den Haftstreifen 26a und 26b. Die Länge der Haftstreifen 26a entspricht in etwa der Breite der Schenkel 16a, 16b, wohingegen die Länge des Haftstreifens 26b der Länge der Unterkante der Basisplatte 16 entspricht. Durch geeignete Wahl verschiedener Längen der Haftstreifen 26 können diese an die unterschiedlichen Geometrien verschiedener Basisplatten 16 angepasst werden.

Um den Logistikprozess als auch die Montage zu vereinfachen, wird ein Gebinde, wie es in der Figur 6 dargestellt ist, hergestellt. Dieses Gebinde umfasst die Basisplatte 16 sowie einem Satz Haftstreifen 26. In einem Gebinde sind bevorzugt zumindest zwei Sätze mit jeweils kurzen und langen Haftstreifen 26a, 26b. Vorzugsweise sind die Haftstreifen 26 pro Satz mit unterschiedlichen Materialstärken ausgestattet. In einem Gebinde ist von jeder Materialstärke zumindest ein Satz an Haftstreifen 26 vorhanden.

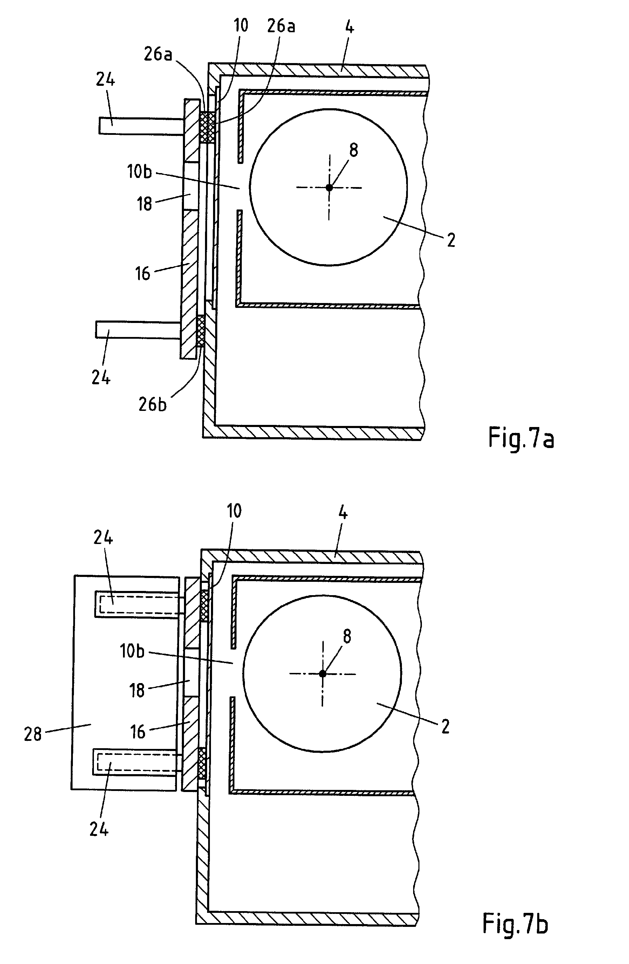

Nachdem der Befestigungsrahmen 14 mittels der Kalibriermarkierung 20a, 20b an dem Zähler 4 ausgerichtet wurde, kann dieser mittels der Haftstreifen 26 an dem Zähler fixiert werden. Dies ist beispielsweise in der Figur 7 dargestellt. Die Figur 7 zeigt einen schematischen Schnitt durch einen Zähler 4. Zu erkennen ist das Zählwerk 2, welches durch eine Blende 10a gegenüber der Scheibe 10 teilweise verdeckt ist. Die Öffnung 18 der Basisplatte 16 wird mittels der Kalibriermarkierung 20a an dem Sichtfenster 10b ausgerichtet. Anschließend wird der Befestigungsrahmen 16 mit den Haftstreifen 26a, 26b gegen den Zähler 4 gedrückt und haftend an dem Zähler 4 befestigt. Zu erkennen ist, dass in dem in Figur 7a gezeigten Beispiel die Oberseite der Basisplatte 16 an der Scheibe befestigt wird, wohingegen die Unterseite unmittelbar an dem Gehäuse des Zählers 4 befestigt wird und sich dadurch ein Höhenunterschied durch die Verblendung ergibt.

Im gezeigten Beispiel sind auf der Oberseite zwei Haftstreifen 26a übereinander angeordnet und auf der Unterseite ist nur ein Haftstreifen 26b vorgesehen. Dadurch ergibt sich ein Höhenausgleich, so dass die Basisplatte 16 in etwa parallel zu der Ebene der Scheibe 10 ausgerichtet werden kann.

Eine weitere Möglichkeit besteht darin, dass die Basisplatte 16 ausschließlich auf der Scheibe 10 befestigt wird, wie in der Figur 7b dargestellt ist. In diesem Fall wird an der Ober- als auch an der Unterseite jeweils die gleiche Anzahl an Haftstreifen 26, welche übereinander gestapelt sind, verwendet. In der Figur 7b ist auf die Befestigungsmittel 24, die als Vorsprünge gebildet sind, der optische Sensor 28 aufgeschoben. Der optische Sensor 28 ist relativ zu der Öffnung 18 in der Basisplatte in einer festen, definierten Position. Da die Öffnung 18 durch die Kalibrierung mittels der Kalibriermarkierung 20a, 20b zu dem Sichtfenster 10b der Blende 10a ausgerichtet ist, ist auch der Sensor 28 zu der Blende 10a bzw. dem Sichtfenster 10b und mithin dem Zählwerk 2 ausgerichtet, sodass ein Auslesen der Ziffern auf den Zählscheiben 6a-e ermöglicht ist.

Mit Hilfe des gegenständlichen Befestigungsrahmens ist es in besonders einfacher Weise möglich, einen optischen Sensor an einem Zähler mit einem mechanischen Zählwerk, insbesondere einem analogen Zählwerk, anzuordnen. Das optische Auslesen des analogen Zählwerks ist dadurch sichergestellt, dass die Relativposition zwischen dem optischen Sensor und dem Zählwerk durch geeignete Kalibriermarkierungen im Wesentlichen definiert ist. Der mechanische Laie kann die Montage des Befestigungsrahmens mit Hilfe der Kalibriermarkierungen ohne weiteres selbst vornehmen, ohne dass die Qualität des optischen Auslesens des analogen Zählwerks nachteilig beeinflusst wird.

## Patentansprüche

1. Befestigungsrahmen, insbesondere zur Befestigung eines optischen Sensors an einem mechanischen Zähler, mit
- einer Basisplatte mit einer Vorderseite und einer Rückseite,
- Befestigungsmitteln eingerichtet zum zumindest kraftschlüssigen Aufnehmen eines digitalen Zählwerks,
wobei die Basisplatte zwei durch eine Öffnung der Basisplatte voneinander beabstandete Schenkel aufweist, und
auf den Schenkeln auf der Vorderseite jeweils zumindest eine Kalibriermarkierung angeordnet ist.

2. Befestigungsrahmen nach Anspruch 1,
**dadurch gekennzeichnet,**
**dass** die Basisplatte biegesteif ist, insbesondere aus einem thermoplastischen Kunststoff gebildet ist.

3. Befestigungsrahmen nach einem der vorangehenden Ansprüche,
**dadurch gekennzeichnet,**
**dass** die Befestigungsmittel aus der Ebene der Vorderseite hervorragende Vorsprünge aufweisen oder dass die Befestigungsmittel in die Ebene der Vorderseite zurückspringende Aufnahmen aufweisen.

4. Befestigungsrahmen nach einem der vorangehenden Ansprüche,
**dadurch gekennzeichnet,**
**dass** die Befestigungsmittel aus einem Material gebildet sind, welches eine höhere Biegefestigkeit aufweist als das Material der Basisplatte.

5. Befestigungsrahmen nach einem der vorangehenden Ansprüche,
**dadurch gekennzeichnet,**
**dass** die Befestigungsmittel und die Basisplatte stoffschlüssig miteinander verbunden sind und/oder dass die Befestigungsmittel und die Basisplatte monolithisch gebildet sind.

6. Befestigungsrahmen nach einem der vorangehenden Ansprüche,
**dadurch gekennzeichnet,**
**dass** die Befestigungsmittel aus zumindest zwei Vorsprüngen gebildet sind, wobei sich die Vorsprünge von der Vorderseite weg erstrecken und/oder dass die Vorsprüngen an zumindest vier Eckbereichen der Basisplatte angeordnet sind und/oder dass die Vorsprünge ausgehend von der Basisplatte sich verjüngend, vorzugsweise konisch gebildet sind und/oder dass die Vorsprünge einen gewinkelten Querschnitt, insbesondere einen L-, V- oder U-förmigen Querschnitt haben und/oder dass die Vorsprünge an ihren Enden Rastnasen aufweisen.

7. Befestigungsrahmen nach einem der vorangehenden Ansprüche,
**dadurch gekennzeichnet,**
**dass** die Basisplatte eine U-förmige oder eine O-förmige Grundform aufweist und/oder dass zwischen den Schenkeln eine Sichtöffnung in der Basisplatte gebildet ist

8. Befestigungsrahmen nach einem der vorangehenden Ansprüche,
**dadurch gekennzeichnet,**
**dass** die Kalibriermarkierungen an zwei gegenüberliegenden Kanten der Schenkel angebracht sind, wobei die Kalibriermarkierung vorzugsweise aufeinander zu weisende Pfeile sind.

9. Befestigungsrahmen nach einem der vorangehenden Ansprüche,
**dadurch gekennzeichnet,**
**dass** in Längsrichtung der Schenkel vorzugsweise äquidistant von der Kalibriermarkierung beabstandet jeweils Bereichsmarkierungen angeordnet sind.

10. Befestigungsrahmen nach einem der vorangehenden Ansprüche,
**dadurch gekennzeichnet,**
**dass** die Bereichsmarkierungen aus jeweils zwei voneinander beabstandeten Strichmarkierungen gebildet sind, wobei der Abstand der Strichmarkierungen einer Höhe eines Sichtfensters eines mechanischen Zählwerks nachgebildet ist.

11. System mit einem Befestigungsrahmen nach einem der vorangehenden Ansprüche und Fixiermitteln, eingerichtet zur Herstellung einer haftenden Verbinden zwischen dem Befestigungsrahmen und dem mechanischen Zähler.

12. System nach Anspruch 10,
**dadurch gekennzeichnet,**
**dass** die Fixiermittel eine beidseitig haftende Oberfläche aufweisen und/oder dass die Fixiermittel aus einem Substrat aus einem elastischen Schaumstoff, insbesondere einem offenporigen Schaumstoff gebildet sind.

13. System nach einem der vorangehenden Ansprüche,
**dadurch gekennzeichnet,**
**dass** in einem Gebinde jeweils ein Befestigungsrahmen und zumindest zwei Streifen Fixiermittel zusammengefasst sind, wobei vorzugsweise zwei Streifen des Fixiermittels eine Länge aufweisen, die in etwa der Breite eines Schenkels entspricht und ein Streifen des Fixiermittels eine Länge aufweist, die in etwa der Breite des Befestigungsrahmens entspricht.

14. System nach einem der vorangehenden Ansprüche,
**dadurch gekennzeichnet,**
**dass** ein optischer Sensor zum Anschluss an die Befestigungsmittel gebildet ist, insbesondere dass der Sensor zu den Vorsprüngen der Befestigungsmittel korrespondierende Rücksprünge aufweist.

15. Verfahren zum Befestigen eines Befestigungsrahmens nach Anspruch 1 mit einem System nach Anspruch 10 an einem mechanischen Zähler, bei dem an der Rückseite des Befestigungsrahmens das Fixiermittel befestigt wird, die Öffnung des Befestigungsrahmens mit Hilfe der Kalibrierungsmarkierung an einem mechanischen Zählwerk des Zählers ausgerichtet wird und anschließend der Befestigungsrahmen in der ausgerichteten Position haftend an der Oberfläche des Zählers befestigt wird.
